# EUROPEAN PATENT SPECIFICATION

(11) **EP 1 648 137 B1**
(45) Date of publication and mention of the grant of the patent: **11.05.2011**
(21) Application number: 05109345.8
(22) Date of filing: 07.10.2005
(51) Int. Cl.: H04L 29/06, G06F 21/00

(54) **System and methods for providing network quarantine using IPSEC**
System und Verfahren zum Versorgen von Netzquarantäne unter IPSEC
Système et méthode pour fournir la quarantaine de réseau en utilisant IPSEC

(30) Priority: 14.10.2004 US 618139 P; 14.02.2005 US 56276
(43) Date of publication of application: 19.04.2006
(73) Proprietor: Microsoft Corporation, Redmond, WA 98052 (US)
(72) Inventor: Swander, Brian D., Redmond, WA 98052 (US); Black, Christopher J., Redmond, WA 98052 (US); Johansson, Jesper M., Redmond, WA 98052 (US); Murthy, Kartik N., Redmond, WA 98052 (US); Mayfield, Paul G., Redmond, WA 98052 (US)
(74) Representative: Grünecker, Kinkeldey, Stockmair & Schwanhäusser Anwaltssozietät

(56) References cited:
- EP-A2- 1 178 644
- US-A1- 2005 131 997

## Description

### FIELD OF THE INVENTION

The present invention relates generally to computer access management, and relates more particularly to checking the security state of clients before allowing them access to host resources.

### BACKGROUND OF THE INVENTION

In computer networks, clients, servers, and peers commonly use trust models and mechanisms to ensure that unauthorized users do not gain access to host computers on a network. These trust models and mechanisms are used to identify those users that are not malicious. However, it is possible that a user's machine poses a danger to other computers without the user's knowledge. For example, a machine could contain a virus, or possess a security hole of which the user is unaware. Thus no matter how non-malicious the user is, the insecure state of the user's machine should result in being isolated from network until the security deficiencies are repaired.

IPsec defines multiple functions to secure communication, including data encryption and data integrity. IPsec uses an authentication header (AH) to provide source authentication and integrity without encryption, and the Encapsulating Security Payload (ESP) to provide authentication and integrity along with encryption. With IPsec, only the sender and recipient know the security key. If the authentication data is valid, the recipient knows that the communication came from the sender and that it was not changed in transit.

IPsec can be envisioned as a layer within the Transmission Control Protocol/Internet Protocol (TCP/IP) stack. This layer is controlled by a security policy on each computer and a negotiated security association between the sender and receiver. The policy consists of a set of filters and associated security behaviors. If a packet's IP address, protocol, and port number match a filter, the packet is subject to the associated security behavior. The first such packet triggers a negotiation of a security association between the sender and receiver. Internet Key Exchange (IKE) is the standard protocol for this negotiation. During an IKE negotiation, the two computers agree on authentication and data-security methods, perform mutual authentication, and then generate a shared key for subsequent data encryption.

After the security association has been established, data transmission can proceed for each computer, applying data security treatment to the packets that it transmits to the remote receiver. The treatment can simply ensure the integrity of the transmitted data, or it can encrypt it as well. Data integrity and data authentication for IP payloads can be provided by an authentication header located between the IP header and the transport header. The authentication header includes authentication data and a sequence number, which together are used to verify the sender, ensure that the message has not been modified in transit, and prevent a replay attack.

ESP is a key format in the architecture, providing confidentiality and integrity by encrypting data to be protected and placing the encrypted data in the data portion of the IP ESP. Depending on the user's security requirements, this mechanism may be used to encrypt either a transport-layer segment (e.g., TCP, UDP, ICMP, IGMP) or an entire IP datagram. Encapsulating the protected data is necessary to provide confidentiality for the entire original datagram. The ESP header is inserted after the IP header and before the upper layer protocol header (transport mode) or before an encapsulated IP header (tunnel mode).

US 2003/0055994 describes such a conventional authentication procedure. However, the conventional authentication procedure does not prevent non-secure, or even malicious, machines from accessing the host. A computer may present valid authentication, but the machine itself can be infected with a virus, or contain a security hole, that should be corrected before the machine is allowed access the network resources of another computer. Accordingly, there is a need in the art for a system and method to ensure that clients are not permitted to access a host until they have passed security checks.

### BRIEF SUMMARY OF THE INVENTION

In view of the foregoing, the present invention provides a method for a host to provide selective network isolation in a network using IP Security Protocol (IPsec), by receiving a Internet Key Exchange (IKE) packet including a client health statement from a client, validating the client health statement, sending to the client a host health statement if the client health statement is valid and denying the client access to the host if the client health statement is invalid. A health statement describes the client's conformance to the security policies of the network. The method further includes communicating with the client through optionally encrypted communication if the client health certificate is acceptable. The health certificate may be an X509 certificate, a Kerberos ticket, or a WS-Security token in various embodiments of the invention.

Another embodiment of the invention provides a method for a host to acquire a health certificate, comprising sending on or more statements of health to a health certificate server, receiving a statement of health response from a health certificate server, and if the statement of health is validated by the health certificate server, receiving a health certificate and configuring the host to implement an IPsec policy that requires a client health certificate from a client before granting the client access to the host. If the statement of health is not validated, the statement of health response indicates the host does not conform to network security policies.

Yet another embodiment of the invention is directed to a computer network implementing a network isolation model. The network includes a first group of computers wherein each computer possesses a health certificate and communicates only with computers that also possess a valid health certificate, a second group of computers wherein each computer possesses a health certificate and communicates with all other computers in the network, and a third group of computers wherein each computer does not possess a health certificate and communicates with all or a subset of other computers in the network. Communication among computers in the first group and between computers of the first group and computers of the second group is accomplished using IPsec.

Additional features and advantages of the invention are made apparent from the following detailed description of illustrative embodiments which proceeds with reference to the accompanying figures.

### BRIEF DESCRIPTION OF THE DRAWINGS

The accompanying drawings incorporated in and forming a part of the specification illustrate several aspects of the present invention, and together with the description serve to explain the principles of the invention. In the drawings:

Figure 1A is a schematic generally illustrating an exemplary network environment across which the present invention operates.

Figure 1B is a block diagram generally illustrating an exemplary computer system on which the present invention resides;

Figure 2 is schematic illustrating interaction of components of one embodiment of the invention;

Figure 3 illustrates the network isolation model of the present invention; and

Figure 4 illustrates the quarantine enforcement client of the present invention.

Figure 5 illustrates a process by which a client obtains a health certificate in accordance with the invention;

Figure 6 illustrates a process by which a client initiates communication with a host in accordance with the invention;

While the invention will be described in connection with certain preferred embodiments, there is no intent to limit it to those embodiments. On the contrary, the intent is to cover all alternatives, modifications, and equivalents as included within the spirit and scope of the invention as defined by the appended claims.

### DETAILED DESCRIPTION OF THE INVENTION

Turning to the drawings, wherein like reference numerals refer to like elements, the present invention is illustrated as being implemented in a suitable computing environment. The following description is based on embodiments of the invention and should not be taken as limiting the invention with regard to alternative embodiments that are not explicitly described herein.

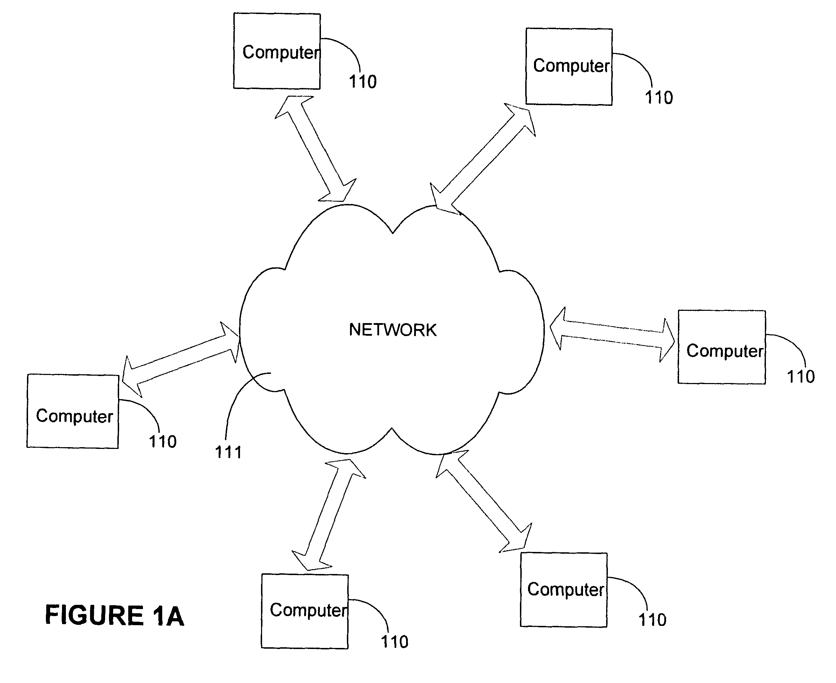

An example of a networked environment in which the invention may be used will now be described with reference to Figure 1A. The example network includes several computers 110 communicating with one another over a network 111, represented by a cloud. Network 111 may include many well-known components, such as routers, gateways, switches, etc. and allows the computers 110 to communicate via wired and/or wireless media. When interacting with one another over the network 111, one or more of the computers may act as clients, network servers, quarantine servers, or peers with respect to other computers. Accordingly, the various embodiments of the invention may be practiced on clients, network servers, quarantine servers, peers, or combinations thereof, even though specific examples contained herein do not refer to all of these types of computers.

Figure 18 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary computing environment 100.

The invention is operational with numerous other general-purpose or special-purpose computing system environments or configurations. Examples of well known computing systems, environments, and configurations that may be suitable for use with the invention include, but are not limited to, personal computers, server computers, hand-held or laptop devices, multiprocessor systems, microprocessor-based systems, set-top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Crenerally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer-storage media including memory-storage devices.

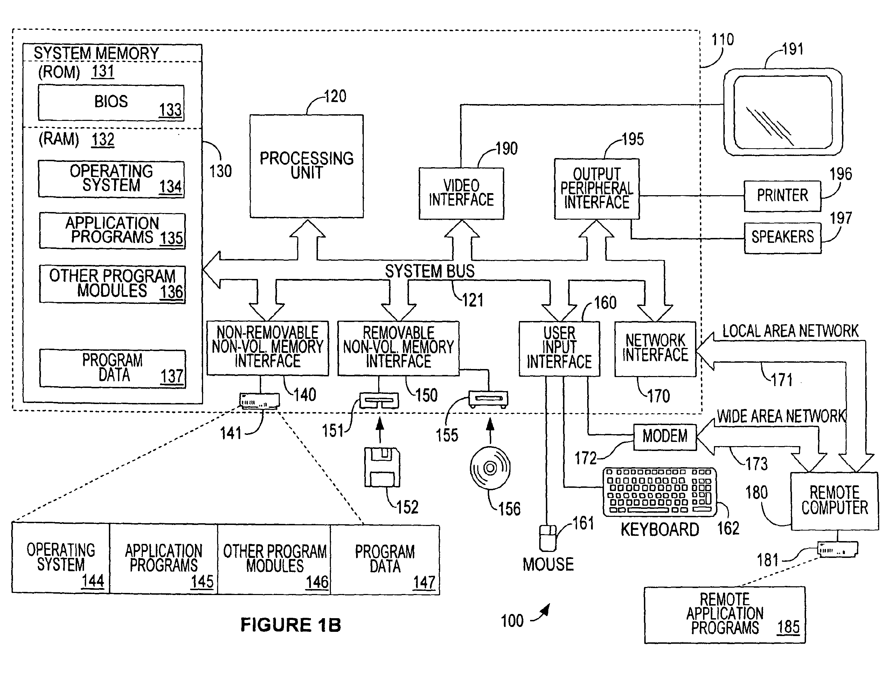

With reference to Figure 1B, an exemplary system for implementing the invention includes a general-purpose computing device in the form of a computer 110, which may act as a client, network server, quarantine server, or peer within the context of the invention. Components of the computer 110 may include, but are not limited to, a processing unit 120, a system memory 130, and a system bus 121 that couples various system components including the system memory 130 to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture bus, Micro Channel Architecture bus, Enhanced ISA bus, Video Electronics Standards Associate local bus, and Peripheral Component Interconnect bus, also known as Mezzanine bus.

The computer 110 typically includes a variety of computer-readable media. Computer-readable media can be any available media that can be accessed by the computer 110 and include both volatile and nonvolatile media, removable and non-removable media. By way of example, and not limitation, computer-readable media may include computer storage media and communication media. Computer storage media include both volatile and nonvolatile, removable and non-removable media implemented in any method or technology for the storage of information such as computer-readable instructions, data structures, program modules, or other data. Computer storage media include, but are not limited to, RAM, ROM, EEPROM, flash memory or other memory technology, CD-ROM, digital versatile disks or other optical disk storage, magnetic cassettes, magnetic tape, magnetic disk storage or other magnetic storage devices, or any other medium which can be used to store the desired information and which can be accessed by the computer 110. Communication media typically embody computer-readable instructions, data structures, program modules, or other data in a modulated data signal such as a carrier wave or other transport mechanism and include any information-delivery media. The term "modulated data signal" means a signal that has one or more of its characteristics set or changed in such a manner as to encode information in the signal. By way of example, and not limitation, communication media include wired media such as a wired network or direct-wired connection and wireless media such as acoustic, RF, infrared, and other wireless media. Combinations of the any of the above should also be included within the scope of computer-readable media.

The system memory 130 includes computer storage media in the form of volatile and nonvolatile memory such as read only memory (ROM) 131 and random access memory (RAM) 132. A basic input/output system 133 (BIOS), containing the basic routines that help to transfer information between elements within the computer 110, such as during start-up, is typically stored in ROM 131. RAM 132 typically contains data and program modules that are immediately accessible to or presently being operated on by the processing unit 120. By way of example, and not limitation, Figure 1B illustrates an operating system 134, application programs 135, other program modules 136, and program data 137.

The computer 110 may also include other removable/non-removable, volatile/nonvolatile computer storage media. By way of example only, Figure 1B illustrates a hard disk drive 141 that reads from or writes to non-removable, nonvolatile, magnetic media, a magnetic disk drive 151 that reads from or writes to a removable, nonvolatile, magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary computing environment 100 include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as the interface 140, and the magnetic disk drive 151 and the optical disk drive 155 are typically connected to the system bus 121 by a removable memory interface, such as the interface 150.

The drives and their associated computer storage media discussed above and illustrated in Figure 1B provide storage of computer-readable instructions, data structures, program modules, and other data for the computer 110. In Figure 1B, for example, the hard disk drive 141 is illustrated as storing an operating system 144, application programs 145, other program modules 146, and program data 147. Note that these components can either be the same as or different from the operating system 134, application programs 135, other program modules 136, and program data 137. The operating system 144, application programs 145, other program modules 146, and program data 147 are given different numbers to illustrate that, at a minimum, they are different copies.

A user may enter commands and information into the computer 110 through input devices such as a keyboard 162 and a pointing device 161, commonly referred to as a mouse, trackball, or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port, or a universal serial bus. A monitor 191 or other type of display device is also connected to the system bus 121 via an interface, such as a video interface 190. In addition to the monitor 191, the computer 110 may also include other peripheral output devices such as speakers 197 and a printer 196 which may be connected through an output peripheral interface 195.

The computer 110 may operate in a networked environment using logical connections to one or more remote computers, such as a remote computer 180. The remote computer 180 may be another personal computer, a server, a router, a network PC, a peer device, or other common network node and typically includes many or all of the elements described above relative to the personal computer 110 although only a memory storage device 181 has been illustrated in Figure 1B. The logical connections depicted in Figure 1B include a local area network (LAN) 171 and a wide area network (WAN) 173 but may also include other networks. Such networking environments are commonplace in offices, enterprise-wide computer networks, intranets, and the Internet.

When used in a LAN networking environment, the personal computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the personal computer 110, or portions thereof, may be stored in the remote memory storage device 181. By way of example, and not limitation, Figure 1B illustrates the remote application programs 185 as residing on the memory device 181. It will be appreciated that the network connections shown are exemplary, and other means of establishing a communications link between the computers may be used.

In the description that follows, the invention is described with reference to acts and symbolic representations of operations that are performed by one or more computers, unless indicated otherwise. As such, it will be understood that such acts and operations, which are at times referred to as being computer-executed, include the manipulation by the processing unit of the computer of electrical signals representing data in a structured form. This manipulation transforms the data or maintains them at locations in the memory system of the computer, which reconfigures or otherwise alters the operation of the computer in a manner well understood by those skilled in the art. The data structures where data are maintained are physical locations of the memory that have particular properties defined by the format of the data. However, while the invention is being described in the foregoing context, it is not meant to be limiting as those of skill in the art will appreciate that various acts and operations described hereinafter may also be implemented in hardware.

The invention is directed to an enforcement mechanism for Network Access Protection that combines the IP Security (IPsec) protocol and Host Firewalls to provide network isolation. The combination of IPsec and a Host Firewall is referred to as an Authenticating Firewall (AFW.) A Quarantine Enforcement Client (QEC) operates on the host to coordinate IPsec and firewall policy. The QEC is further responsible for obtaining a health certificate to communicate with other IPsec policy-enabled hosts.

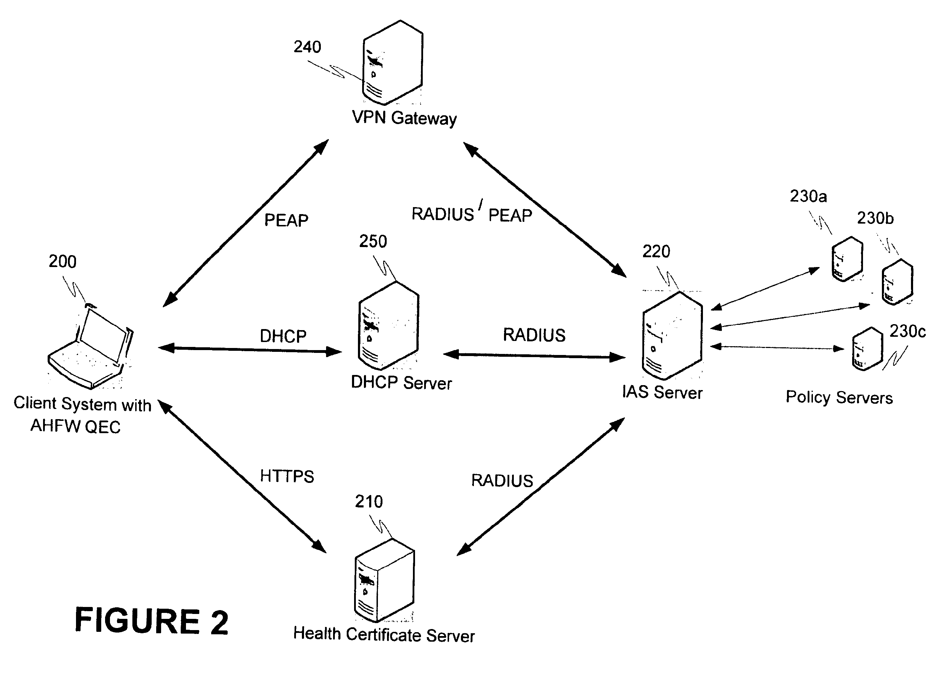

Figure 2 depicts a typical networking environment in which the invention may be implemented. Client 200 sends a Statement of Health (SoH) to a Health Certificate Server (HCS) 210. The HCS verifies the SoH through an Internet Authentication Server (IAS) 220, that maintains updated policy requirements from policy servers 230a, 230b, 230c. If the SoH passes all policy requirements, the HCS 210 isses a health certificate to the client 200. The client 200 can then use the health certificate to communicate with other protected systems, such as VPN Gateway 240 or DHCP Server 250 in Figure 2.

The HCS issues certificates to clients that satisfy health checks. In one embodiment, a Health Certificate is an X509 certificate with a very short lifetime (configurable, but on the order of hours). However, the Health Certificate may be any verifiably data structure that indicates the health of a system, such as a Kerberos ticket or a WS-Security token. Once a system has a Health Certificate, it can use it to prove its health by authenticating to other systems. In one embodiment, the HCS is standalone, meaning that it does not need to integrate into a PKI hierarchy if one is already installed. In another embodiment the HCS is integrated into an existing PKI for management purposes or to enable health certificates bound to specific entities. As part of standard NAP bootstrapping, the client will be given a root certificate from its HCS. The client may install this root into a private store dedicated to quarantine purposes (if an existing PKI is being leveraged, the system assumes that the root trust has already been provisioned and no bootstrap is needed), or it may install the root in a standard certificate store for the machine or user.

AFW isolation is different from the isolation provided by other quarantine enforcement mechanisms, such as DHCP and 802.1x. AFW isolation is enforced in a distributed manner by each individual host as opposed to being centrally enforced at the point at which network connectivity is being provided. This means that each host is given the ability to protect itself even in the presence of malicious hosts on the network, something which is not possible with other enforcement mechanisms, such as DHCP or 802.1x quarantine. AFW is the only isolation option that can be provided on a per-host, per-port, or per-application basis.

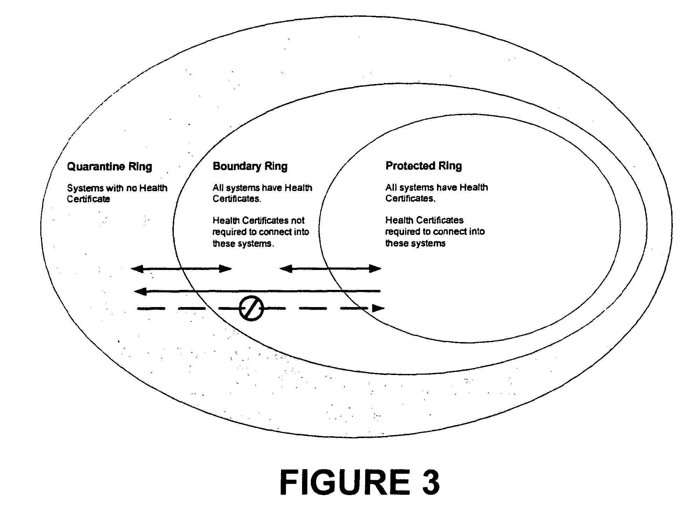

AFW Quarantine divides a physical network into three or more logical rings, as depicted in Figure 3. Each computer exists in one and only one logical ring at any given time. The rings are defined in terms of Health Certificate possession and Health Certificate communication requirements. The rings give maximum communication capabilities to all systems while still protecting healthy systems from attacks from unhealthy systems. The Protected Ring is defined as the collection of computers that have Health Certificates and that may require their peers to have Health Certificates. Most clients and servers would exist in this ring. Computers in the Protected Ring can freely communicate with some or all of the computers in either the Protected Ring or the Boundary Ring, as per the site policy defined by the administrator. They may be able to communicate with computers in the Quarantine Ring provided that the computer in the protected ring initiates the communication; again, as per site policy. For example, a client in the Protected Ring might be able to request a web page from a server in the Quarantine Ring. However, a client in the Quarantine Ring is blocked from requesting a web page from a server in the Protected Ring. If the administrator decides to quarantine specific applications (as opposed to entire computers) then communication between the rings is only restricted for those applications. For example, if FTP communication is quarantined, then FTP clients in the Quarantine Ring would be blocked from connecting to FTP servers in the Protected Ring. However, in that specific case, the same two computers would be able to communicate freely over HTTP regardless of their ring membership.

The Boundary Ring is defined as the collection of computers that have Health Certificates but do not require their peers to have Health Certificates. Such computers may freely communicate with any other computer, regardless of ring membership. The boundary ring would typically contain very few computers that were specifically configured to exist there. Systems in the boundary ring would usually be servers that need to initiate traffic to all clients regardless ring membership. For example, a patch server needs to provide patches to clients in the Quarantine Ring in order for those clients to be issued Health Certificates. It also needs to service clients in the Protected Ring and accept communication from management servers in the Protected Ring.

The Quarantine Ring is defined as the collection of computers that do not have Health Certificates. They may not have Health Certificates because they have not completed health checks, they are guests on the network, or they are not capable of participating in the quarantine system. Computers in the Quarantine Ring can communicate freely except with computers in the Protected Ring. It will be recognized by those skilled in the art that other isolation models may be implemented by changing the IPsec policies and requirements.

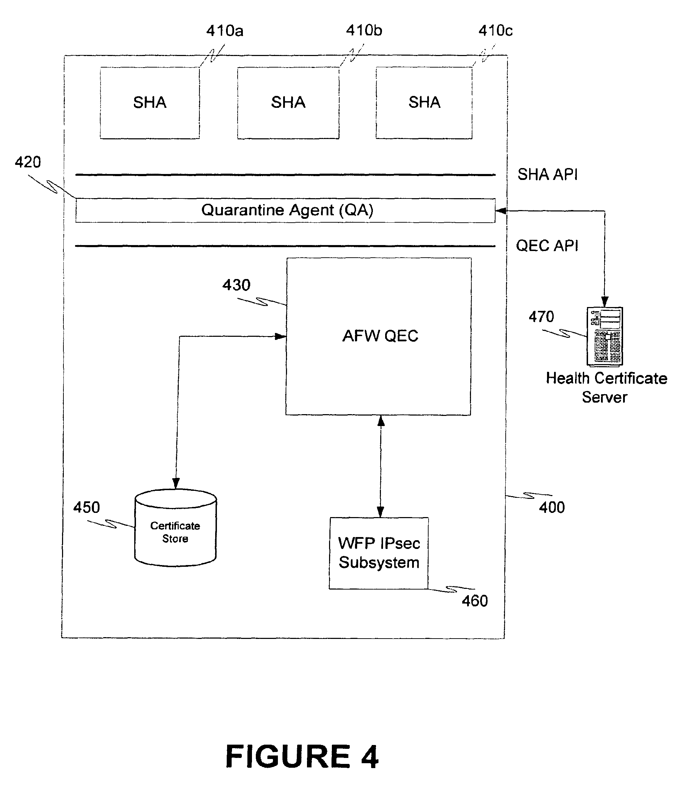

Turning to Figure 4, the Quarantine Platform Architecture is extended on the client 400 with an AFW Quarantine Enforcement Client (QEC) 430. The purpose of the AFW QEC is to negotiate with the Health Certificate Server to acquire a Health Certificate and configure the IPsec and Firewall components accordingly. The Quarantine Agent (QA) coordinates with the System Health Agents (SHA) 410a, 410b, 410c to assemble the SoH. Each SHA 410a, 410b, 410c is responsible for determining whether the client satisfies all of the policies and requirements needed for a Health Certificate. The QA 420 acquires the results of these checks through an SHA API and assembles them into a SoH that can be provided to the QEC 430. When the QEC 430 acquires a new Health Certificate, the QEC 430 first communicates the SoH and any authentication credentials to the HCS 470. In one embodiment, this communication is via secure hypertext transfer protocol (HTTPS). If the QEC 430 fulfills all policy requirements, the QEC 430 receives an SoH Response and a Health Certificate from the HCS 470. The QEC 430 configures the default quarantine rules to the firewall and IPsec subsystems 460. If the quarantine system is stand alone, the QEC places the Health Certificate into a private certificate store 450. If the client does not pass all health checks, the QEC receives from the HCS one or more SoH Responses informing that the client has failed one or more of the policy requirements. The SoH response may detail the specific requirements that the client failed. The QEC may then seek out a fix-up server to install the patches and updates necessary to bring the client back to a healthy state.

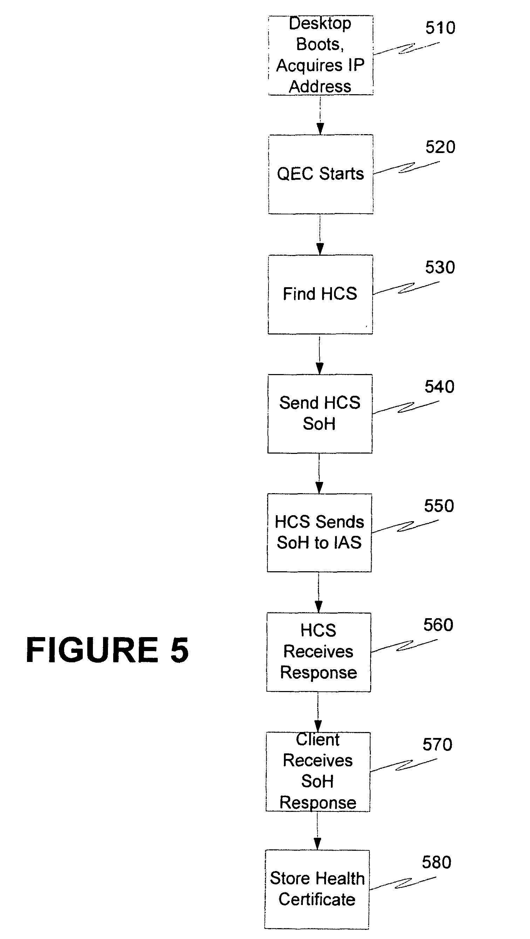

Figure 5 illustrates the process that a system follows when it participates in an AFW Quarantine system. At step 510, the system boots. It acquires an unrestricted IP addresses from its DHCP server (assuming that DHCP-based quarantine enforcement is not deployed). The system's firewall is in "on with no exceptions" mode so that no other system can connect to it. At this point, the system is in the Quarantine Ring because it does not have an up to date Health Certificate. It may be able to communicate with other quarantined systems and can access the Internet. Computers in the Protected Ring block this system from connecting to them. At step 520, the AFW QEC starts up. The QEC initiates a connection to the Health Certificate Server (HCS) and validates that this HCS is trusted by validating its certificate against a list of trusted HCS servers at step 530. At step 540, the QEC sends the client's current Statement of Health (SoH) information to the HCS. The HCS passes the SoH information to the IAS server at step 550. At step 560, the IAS server determines whether the client should be granted a Health Certificate based on the SoH information and its configured policy. The IAS server returns Statement of Health Responses (SoHR) back to the Health Certificate Server along with a value that states whether the client should be issued a Health Certificate.

At step 570, the Health Certificate server passes the SoHR's back to the AFW QEC. If the client passed health checks, it is also issued a Health Certificate at this time. The AFW QEC will undergoes steps 530 to 570 whenever new SoH information arrives in the quarantine agent or whenever a current Health Certificate is about to expire. If the AFW QEC is issued a Health Certificate, it adds that certificate to the machine store of the computer at step 580. It configures the IPsec subsystem to attempt to authenticate with the Health Certificate to any peer it can. It configures the host firewall to allow incoming connections from any peer that authenticated with a Health Certificate using IPsec. At this point, the computer is now operating in the Protected Ring.

A system that is not capable of participating in AFW quarantine will simply boot into the Quarantine Ring and stay there. It may be able to access the Internet and possibly any other computers in the Boundary Ring or the Quarantine Ring. Protected Ring computers will be able to connect to these computers but not vice versa.

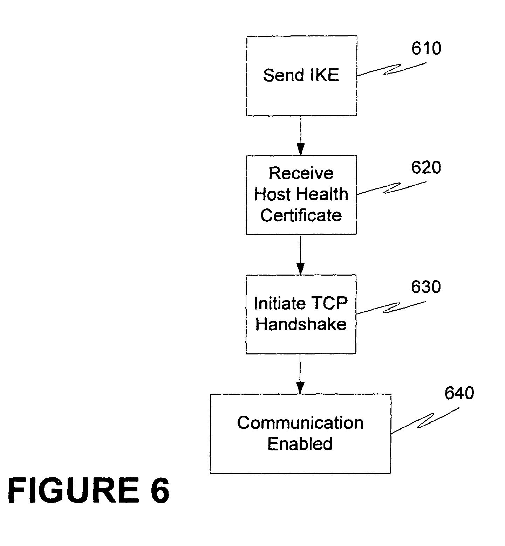

Figure 6 illustrates the process by which a client initiates communication with IPsec-enabled hosts. At step 610, the client sends to the host an IKE packet that includes the client's Health Certificate. At step 620, the host validates the Health Certificate and responds by providing its own Health Certificate. At step 630, the client initiates a TCP/IP handshake using ESP. At step 640, the handshake is completed and optionally encrypted communication is enabled between the client and the host.

The foregoing description of various embodiments of the invention has been presented for purposes of illustration and description. It is not intended to be exhaustive or to limit the invention to the precise embodiments disclosed. Numerous modifications or variations are possible in light of the above explanations. The embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A method for a host to provide selective network isolation in a network using IP Security Protocol, IPsec, comprising:
receiving a Internet Key Exchange, IKE, packet including a client health certificate from a client;
validating the client health certificate;
sending to the client a host health certificate if the client health certificate is valid; and
denying the client access to the host if the client health certificate is invalid.

2. The method of claim 1, wherein a health certificate indicates that an owner of the certificate conforms to the security policies of the network.

3. The method of claim 1, further comprising communicating with the client through IPsec communication if the client health certificate is valid.

4. The method of claim 1, wherein the health certificate is an X509 certificate.

5. The method of claim 1, wherein the health certificate is a Kerberos ticket.

6. The method of claim 1, wherein the health certificate is a WS-Security token.

7. A computer-readable medium having stored thereon computer-executable instructions for performing the method of claim 1.

8. A method for a host to acquire a health certificate, comprising:
sending at least one statement of health to a health certificate server;
receiving at least one statement of health response from a health certificate server; and
if the at least one statement of health is validated by the health certificate server, receiving a health certificate and configuring the host to implement an IPsec policy that requires a client health certificate from a client before granting the client access to the host.

9. The method of claim 8, wherein if the at least one statement of health is not validated, the at least one statement of health response indicates the host does not conform to network security policies.

10. The method of claim 8, wherein the health certificate is an X509 certificate.

11. The method of claim 8, wherein the health certificate is a Kerberos ticket.

12. The method of claim 8, wherein the health certificate is a WS-Security token.

13. A computer-readable medium having stored thereon computer-executable instructions for performing the method of claim 8.

14. A computer network implementing a network isolation model, comprising:
a first group of computers wherein each computer possesses a health certificate and communicates only with computers that also possess a valid health certificate;
a second group of computers wherein each computer possesses a health certificate and communicates with all other computers in the network; and
a third group of computers wherein each computer does not possess a health certificate and communicates with all other computers in the network.

15. The network of claim 14, wherein communication among computers in the first group and between computers of the first group and computers of the second group is accomplished using IPsec.

16. The network of claim 14, the health certificate is an X509 certificate.

17. The network of claim 14, wherein the health certificate is a Kerberos ticket.

18. The network of claim 14, wherein the health certificate is a WS-Security token.

19. The network of claim 14, wherein the health certificate indicates that an owner of the certificate conforms to established security policies of the network.

20. The network of claim 14, wherein computers in the first group can initiate communication with computers in the third group but computers in the third group cannot initiate communication with computers in the first group.

## Patentansprüche

1. Verfahren, das für einen Host eine selektive Netzwerkisolierung in einem Netzwerk unter Verwendung eines IP-Sicherheitsprotokolls (IP Security Protocol) IPsec bereitstellt, umfassend:
Empfangen eines Internetschlüsselaustauschpaketes (Internet Key Exchange Packet) IKE. das ein Client-Gesundheitszertifikat beinhaltet, von einem Client;
Validieren des Client-Gesundheitszertifikates;
an den Client erfolgendes Senden eines Host-Gesundheitszertifikates, wenn das Client-Gesundheitszertifikat gültig ist; und
dem Client gegenüber erfolgendes Verweigern des Zugriffes auf den Host, wenn das Client-Gesundheitszertifikat nicht gültig ist.

2. Verfahren nach Anspruch 1, wobei ein Gesundheitszertifikat angibt, dass ein Inhaber des Zertifikates den Sicherheitsrichtlinien des Netzwerkes genügt.

3. Verfahren nach Anspruch 1, des Weiteren umfassend ein Kommunizieren mit dem Client über eine IPsec-Kommunikation, wenn das Client-Gesundheitszertifikat gültig ist.

4. Verfahren nach Anspruch 1, wobei das Gesundheitszertifikat ein X509-Zertifikat ist.

5. Verfahren nach Anspruch 1, wobei das Gesundheitszertifikat ein Kerberos-Ticket ist.

6. Verfahren nach Anspruch 1, wobei das Gesundheitszertifikat ein WS-Sicherheits-Token ist.

7. Computerlesbares Medium, auf dem computerausführbare Anweisungen zum Durchführen des Verfahrens nach Anspruch 1 gespeichert sind.

8. Verfahren, durch das ein Host ein Gesundheitszertifikat erwerben kann, umfassend:
Senden wenigstens einer Gesundheitsmitteilung an einen Gesundheitszertifikatserver;
Empfangen wenigstens einer Antwort auf die Gesundheitsmitteilung von einem Gesundheitszertifikatserver; und
dann, wenn die wenigstens eine Gesundheitsmitteilung von dem Gesundheitszertifikatserver validiert ist, erfolgendes Empfangen eines Gesundheitszertifikates und Konfigurieren des Hosts zum Implementieren einer IPsec-Richtlinie, die ein Client-Gesundheitszertifikat von einem Client erfordert, bevor dem Client Zugriff auf den Host gewährt wird.

9. Verfahren nach Anspruch 8, wobei dann, wenn die wenigstens eine Gesundheitsmitteilung nicht validiert ist, die wenigstens eine Antwort auf die Gesundheitsmitteilung angibt, dass der Host den Netzwerksicherheitsrichtlinien nicht genügt.

10. Verfahren nach Anspruch 8, wobei das Gesundheitszertifikat ein X509-Zertifikat ist.

11. Verfahren nach Anspruch 8, wobei das Gesundheitszertifikat ein Kerberos-Ticket ist.

12. Verfahren nach Anspruch 8, wobei das Gesundheitszertifikat ein WS-Sicherheits-Token ist.

13. Computerlesbares Medium, auf dem computerausführbare Anweisungen zum Durchführen des Verfahrens nach Anspruch 8 gespeichert sind.

14. Computernetzwerk, das ein Netzwerkisolationsmodell implementiert, umfassend:
eine erste Gruppe von Computern, wobei jeder Computer ein Gesundheitszertifikat besitzt und nur mit Computern kommuniziert, die ebenfalls ein gültiges Gesundheitszertifikat besitzen;
eine zweite Gruppe von Computern, wobei jeder Computer ein Gesundheitszertifikat besitzt und mit allen anderen Computern in dem Netzwerk kommuniziert; und
eine dritte Gruppe von Computern, wobei jeder Computer kein Gesundheitszertifikat besitzt und mit allen anderen Computern in dem Netzwerk kommuniziert.

15. Netzwerk nach Anspruch 14, wobei die Kommunikation zwischen Computern in der ersten Gruppe und zwischen Computern der ersten Gruppe und Computern der zweiten Gruppe unter Verwendung von IPsec vorgenommen wird.

16. Netzwerk nach Anspruch 14, wobei das Gesundheitszertifikat ein X509-Zertifikat ist.

17. Netzwerk nach Anspruch 14, wobei das Gesundheitszertifikat ein Kerberos-Ticket ist.

18. Netzwerk nach Anspruch 14, wobei das Gesundheitszertifikat ein WS-Sicherheits-Token ist.

19. Netzwerk nach Anspruch 14, wobei das Gesundheitszertifikat angibt, dass ein Inhaber des Zertifikates den etablierten Sicherheitsrichtlinien des Netzwerkes genügt.

20. Netzwerk nach Anspruch 14, wobei Computer in der ersten Gruppe eine Kommunikation mit Computern in der dritten Gruppe initiieren können, wohingegen Computer in der dritten Gruppe eine Kommunikation mit Computern in der ersten Gruppe nicht initiieren können.

## Revendications

1. Procédé pour qu'un hôte fournisse un isolement de réseau sélectif dans un réseau utilisant un Protocole de Sécurité IP, IPsec, comprenant :
la réception d'un paquet d'Échange de Clé Internet, IKE, incluant un certificat de santé de client provenant d'un client ;
la validation du certificat de santé de client ;
l'envoi au client d'un certificat de santé d'hôte si le certificat de santé de client est valide ; et
le refus d'accès du client à l'hôte si le certificat de santé de client est invalide.

2. Procédé selon la revendication 1, dans lequel un certificat de santé indique qu'un propriétaire du certificat se conforme à la politique de sécurité du réseau.

3. Procédé selon la revendication 1, comprenant en outre une communication avec le client par une communication IPsec si le certificat de santé de client est valide.

4. Procédé selon la revendication 1, dans lequel le certificat de santé est un certificat X509.

5. Procédé selon la revendication 1, dans lequel le certificat de santé est un ticket Kerberos.

6. Procédé selon la revendication 1, dans lequel le certificat de santé est un jeton WS-Sécurité.

7. Support lisible par ordinateur ayant stocké en son sein des instructions pouvant être exécutées par ordinateur pour effectuer le procédé selon la revendication 1.

8. Procédé pour qu'un hôte fasse l'acquisition d'un certificat de santé, comprenant :
l'envoi d'au moins une déclaration de santé à un serveur de certificat de santé ;
la réception d'au moins une déclaration de réponse de santé en provenance d'un serveur de certificat de santé ; et
si la déclaration de santé est validée par le serveur de certificat de santé, la réception d'un certificat de santé et la configuration de l'hôte pour mettre en oeuvre une politique IPsec qui exige un certificat de santé de client en provenance d'un client avant l'octroi de l'accès du client à l'hôte.

9. Procédé selon la revendication 8, dans lequel, si la déclaration de santé n'est pas validée, la déclaration de réponse de santé indique que l'hôte ne se conforme pas à la politique de sécurité de réseau.

10. Procédé selon la revendication 8, dans lequel le certificat de santé est un certificat X509.

11. Procédé selon la revendication 8, dans lequel le certificat de santé est un ticket Kerberos.

12. Procédé selon la revendication 8, dans lequel le certificat de santé est un jeton WS-Sécurité.

13. Support lisible par ordinateur ayant stocké en son sein des instructions pouvant être exécutées par ordinateur pour effectuer le procédé selon la revendication 8.

14. Réseau informatique mettant en oeuvre un modèle d'isolement de réseau, comprenant :
un premier groupe d'ordinateurs dans lequel chaque ordinateur possède un certificat de santé et communique seulement avec des ordinateurs qui possèdent également un certificat de santé valide ;
un deuxième groupe d'ordinateurs dans lequel chaque ordinateur possède un certificat de santé et communique avec tous les autres ordinateurs dans le réseau ; et
un troisième groupe d'ordinateurs dans lequel chaque ordinateur ne possède pas de certificat de santé et communique avec tous les autres ordinateurs dans le réseau.

15. Réseau selon la revendication 14, dans lequel la communication entre des ordinateurs dans le premier groupe et entre des ordinateurs du premier groupe et des ordinateurs du deuxième groupe est accomplie en utilisant IPsec.

16. Réseau selon la revendication 14, dans lequel le certificat de santé est un certificat X509.

17. Réseau selon la revendication 14, dans lequel le certificat de santé est un ticket Kerberos.

18. Réseau selon la revendication 14, dans lequel le certificat de santé est un jeton WS-Sécurité.

19. Réseau selon la revendication 14, dans lequel le certificat de santé indique qu'un propriétaire du certificat se conforme à la politique de sécurité établie du réseau.

20. Réseau selon la revendication 14, dans lequel des ordinateurs dans le premier groupe peuvent amorcer une communication avec des ordinateurs dans le troisième groupe mais des ordinateurs dans le troisième groupe ne peuvent pas amorcer une communication avec des ordinateurs dans le premier groupe.
